(19) Europäisches Patentamt
European Patent Office
Office européen des brevets

(11) **EP 3 069 893 A1**

(12) **EUROPEAN PATENT APPLICATION**

(43) Date of publication:
**21.09.2016 Bulletin 2016/38**

(21) Application number: **16161004.3**

(22) Date of filing: **17.03.2016**

(51) Int Cl.:
**B41M 5/26** (2006.01)      **B41M 5/30** (2006.01)
**B41M 5/28** (2006.01)      **B41J 3/28** (2006.01)
**B41J 11/46** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.03.2015 JP 2015055629**

(71) Applicant: **Ricoh Company, Ltd.
Tokyo 143-8555 (JP)**

(72) Inventors:
• **OHI, Katsuya**
  **Ohta-ku, Tokyo 143-8555 (JP)**
• **ASAI, Toshiaki**
  **Ohta-ku, Tokyo 143-8555 (JP)**
• **ISHIMI, Tomomi**
  **Ohta-ku, Tokyo 143-8555 (JP)**

(74) Representative: **Lamb, Martin John Carstairs
Marks & Clerk LLP
90 Long Acre
London WC2E 9RA (GB)**

(54) **STRUCTURE AND CONVEYOR LINE SYSTEM USING STRUCTURE**

(57)    Provided is a structure including a supporting member, a recording medium configured to be attached on a surface of the supporting member, and a positioning portion configured to serve as a mark when the recording medium is attached on the surface of the supporting member, the positioning portion having an average height lower than an average thickness of the recording medium.

FIG. 11

**Description**

BACKGROUND OF THE INVENTION

Field of the Invention

The present disclosure relates to structures and conveyor line systems using the structures.

Description of the Related Art

Hitherto, there have been proposed various types of conveyor line systems configured to convey a conveying container on which a recording medium (e.g., a thermoreversible recording medium) is attached at a desired position and which serves as a supporting member in the predetermined conveying direction, and to irradiate the recording medium with laser light to rewrite an image (see, for example, Japanese Unexamined Patent Application Publication No. 2008-194905, Japanese Unexamined Patent Application Publication No. 2010-280498, and Japanese Unexamined Patent Application Publication No. 2003-320692).

Recently, in the conveyor line system, there is a need to record information as much as possible on the recording medium and, therefore, to record much information on an area as large as possible on the recording medium. In the case where the recording medium is mispositioned during attachment of the recording medium on the conveying container, an image may not be recorded on an edge portion of the recording medium or an image recorded on the edge portion of the recording medium may not be erased well. Additionally, a blank space on which an information reading code (e.g., a barcode or a two-dimensional code) would be attached cannot be ensured or an image may be recorded at an incorrect position on the recording medium, leading to decreased visibility or poor appearance.

Therefore, there has been an attempt that a positioning portion serving as a mark is provided on a surface of the conveying container in order to attach the recording medium at a desired position on the conveying container accurately and efficiently without mispositioning.

SUMMARY OF THE INVENTION

The present invention aims to provide a structure which can prevent readability and image density of a read image of a recording medium from deteriorating, without an edge portion of the recording medium peeling even after rewriting an image repeatedly.

A structure according to the present invention as a means for solving the above problem includes a supporting member, a recording medium, and a positioning portion. The recording medium is configured to be attached on a surface of the supporting member. The positioning portion is configured to serve as a mark when the recording medium is attached on the surface of the supporting member. The positioning portion has an average height lower than an average thickness of the recording medium.

According to the present invention, there can be provided a structure which can prevent readability and image density of a read image of a recording medium from deteriorating, without an edge portion of the recording medium peeling even after rewriting an image repeatedly.

BRIEF DESCRIPTION OF THE DRAWINGS

FIG. 1 is a schematic diagram illustrating that a positioning portion formed on a supporting member obstructs attachment of a recording medium during attachment of the recording medium on the supporting member using a pressing roller;

FIG. 2 is a schematic diagram illustrating that a positioning portion formed on a supporting member obstructs attachment of a recording medium during attachment of the recording medium on the supporting member using a spatula;

FIG. 3 is a schematic diagram illustrating that a structure according to the present invention prevents a positioning portion formed on a supporting member from obstructing attachment of a recording medium during attachment of the recording medium on the supporting member using a pressing roller;

FIG. 4 is a schematic diagram illustrating one exemplary positioning portion formed on a surface of a supporting member;

FIG. 5 is a schematic diagram illustrating another exemplary positioning portion formed on a surface of a supporting member;

FIG. 6 is a schematic diagram illustrating another exemplary positioning portion formed on a surface of a supporting member;

FIG. 7 is a schematic diagram illustrating another exemplary positioning portion formed on a surface of a supporting member;

FIG. 8 is a schematic diagram illustrating another exemplary positioning portion formed on a surface of a supporting member;

FIG. 9 is a schematic diagram illustrating another exemplary positioning portion formed on a surface of a supporting member;

FIG. 10 is a schematic cross-sectional view illustrating one exemplary layer configuration of a thermoreversible recording medium;

FIG. 11 is a schematic diagram illustrating one exemplary conveyor line system according to the present invention;

FIG. 12 is a scan image of a solid image in Example 1;

FIG. 13 a scan image of a barcode in Example 1;

FIG. 14 is a scan image of a solid image in Comparative Example 1; and

FIG. 15 is a scan image of a barcode in Comparative Example 1.

DETAILED DESCRIPTION OF THE INVENTION

(Structure)

A structure according to the present invention includes a supporting member, a recording medium configured to be attached on a surface of the supporting member, and a positioning portion having an average height lower than an average thickness of the recording medium and configured to serve as a mark when the recording medium is attached on the surface of the supporting member; and, if necessary, further includes other members.

Conventionally, in the case of attaching the recording medium using a pressing roller as an attaching tool, pressure is not applied to an area of the recording medium on which the pressing roller is in contact with the positioning portion, so that an edge portion of the recording medium may be attached with only weak adhesion force.

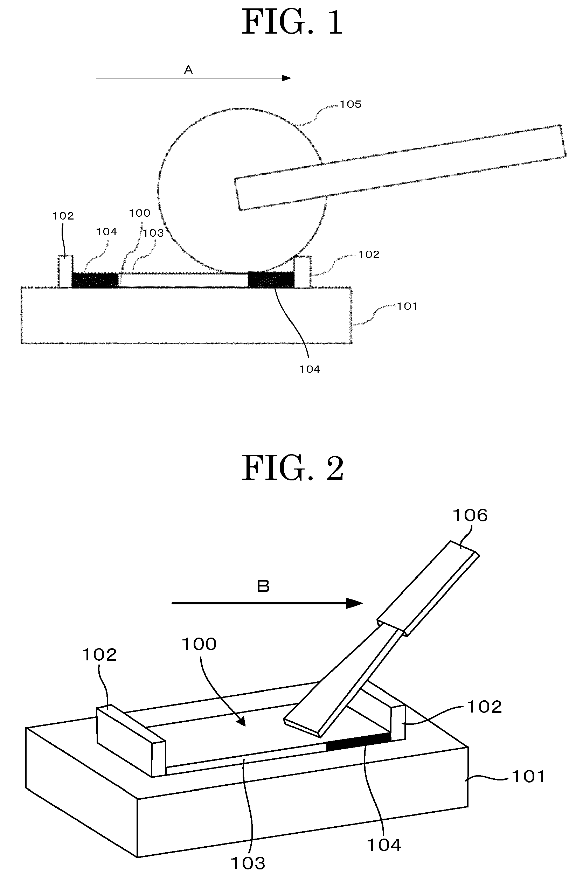

FIG. 1 is a schematic diagram illustrating attachment of a recording medium 100 at a certain position on a supporting member 101 using a pressing roller 105. The pressing roller 105 is moved in a direction A indicated in FIG. 1 along a positioning portion 102 formed on the supporting member 101 as a mark, to thereby attach the recording medium 100 on the supporting member 101. As a result, strong adhesion force can be achieved on an area 103 by pressure applied by the pressing roller 105. On the other hand, only weak adhesion force can be achieved on an area 104 since an average height of the positioning portion 102 is higher than an average thickness of the recording medium 100, and, thus, insufficient pressure is applied by the pressing roller 105 due to obstruction of the positioning portion 102.

Meanwhile, in the case of moving a spatula serving as the attaching tool in one direction, pressure is not applied to an area of the recording medium on which the spatula is in contact with the positioning portion, so that the edge portion of the recording medium may be attached with only weak adhesion force. In the case where the spatula is moved back and forth in order to solve the above problem, it takes a long time to attach the recording medium and the recording medium may be damaged.

FIG. 2 is a schematic diagram illustrating attachment of a recording medium 100 at a certain position on a supporting member 101 using a spatula 106 moving in one direction. A spatula 106 is moved in a direction B indicated in FIG. 2 along a positioning portion 102 formed on the supporting member 101 as the mark, to thereby attach the recording medium 100 on the supporting member 101. As a result, strong adhesion force can be achieved on an area 103 by pressure applied by the spatula 106. On the other hand, only weak adhesion force can be achieved on an area 104 since an average height of the positioning portion 102 is higher than an average thickness of the recording medium 100, and, thus, insufficient pressure is applied by the spatula 106 due to obstruction of the positioning portion 102.

Therefore, in the case where the recording medium is irradiated with laser light to rewrite an image repeatedly under a state in which the edge portion of the recording medium is attached on a surface of the conveying container with only weak adhesion force as described above, there may be a problem that the edge portion of the recording medium peels to cause poor appearance. When the edge portion of the recording medium peels as described above, an initially peeled portion may trigger further peeling to enlarge the peeled portion. This is because, for example, a worker scratches the recording medium when the worker tries to catch the conveying container; the recording medium is exposed to high-pressure washing liquid during washing of the conveying container; when the conveying containers are stored in a stacked state, one conveying container is rubbed with another conveying container; and when the conveying container is about to stop on the conveyor line, the recording medium crashes into an article conveyed from the downstream side of the conveyor line. The peeled portion may be enlarged to 1 cm through 10 cm depending on operating conditions. Alternatively, the recording medium may be completely separated as a whole from the conveying container.

In the case where an image is recorded on the enlarged peeled portion as described above, heat tends to be accumulated easier in the peeled portion than in an unpeeled portion, and an irradiation distance between the recording medium and a recording device is decreased, leading to decreased image density of characters or read images. In particular, a read image of, for example, a barcode may be deteriorated in readability.

In the present invention, the average height of the positioning portion is lower than the average thickness of the recording medium. This prevents the height of the positioning portion from obstructing attachment of the recording medium when the recording medium is attached on a surface of the supporting member using the positioning portion as the mark. As a result, the recording medium can be attached at a desired position with uniform and strong adhesion force.

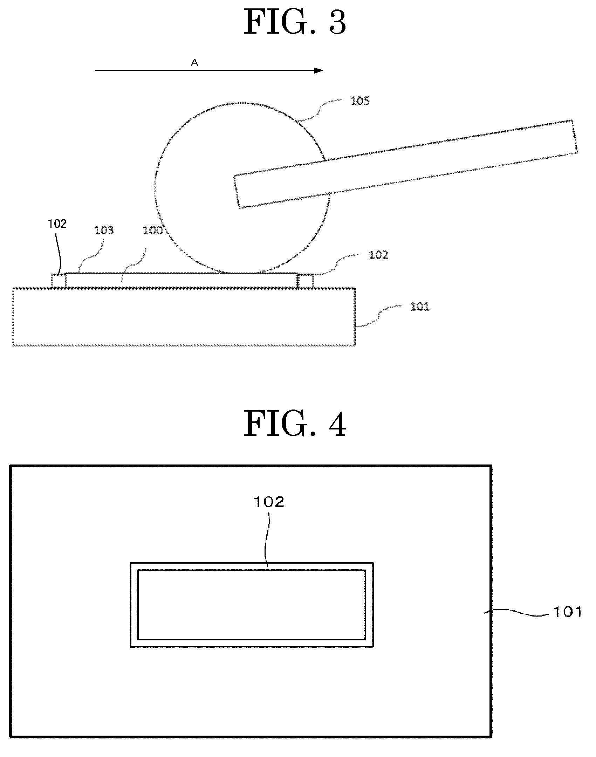

FIG. 3 is a schematic diagram illustrating one exemplary attachment according to the present invention of a recording medium 100 at a certain position on a supporting member 101 using a pressing roller 105. The pressing roller 105 is moved in a direction A indicated in FIG. 3 along a positioning portion 102 formed on the supporting member 101 as a mark, to thereby attach the recording medium 100 on the supporting member 101. In FIG. 3, an average height of the positioning portion 102 is lower than an average thickness of the recording medium 100, and, thus, the positioning portion 102 does not obstruct the pressing roller 105 and sufficient pressure is applied to an entire surface of the recording medium 100 by the pressing roller 105, resulting in strong adhesion force equal to or stronger than the predetermined adhesion force.

As a result, the edge portion of the recording medium can be prevented from peeling even after rewriting an image repeatedly. Additionally, even when the edge portion of the recording medium is peeled, the peeled portion can be prevented from further peeling to enlarge. Therefore, readability of a read image of the recording medium and the image density of characters or read images can be prevented from deteriorating.

The predetermined adhesion force refers to adhesion force capable of preventing the recording medium from peeling, and varies depending on physical properties such as material and shape of an adherend; physical properties such as easiness of curl, water resistance, heat resistance, and detergent resistance of the recording medium; and usage environment.

The peeling refers to a state in which at least part of the recording medium is completely separated from the supporting member.

The average height of the positioning portion is preferably 90% or less, more preferably 80% or less of the average thickness of the recording medium. The average height of the positioning portion of 90% or less of the average thickness of the recording medium allows the predetermined pressure to be easily applied to the edge portion of the recording medium adjacent to the positioning portion during attachment of the recording medium. This can more surely prevent the recording medium from peeling at the edge portion of the recording medium.

The average height of the positioning portion is not particularly limited and may be appropriately selected depending on the intended purpose, but is preferably 5 μm or more, more preferably 10 μm or more, further preferably 20 μm or more. The height of the positioning portion of 5 μm or more can advantageously prevent the recording medium from being damaged or peeled due to a human hand or a tool entered from outside the recording medium.

The height of the positioning portion can be measured with, for example, a caliper, a contact film thickness gauge, or a step gauge.

The average thickness of the recording medium is preferably 50 μm or more, more preferably 100 μm or more, further preferably 200 μm or more, but preferably 2,000 μm or less, more preferably 1,000 μm or less. The average thickness of 50 μm or more aids in ensuring stiffness of the recording medium. The recording medium is, therefore, advantageously difficult to be bend and easy to attach on the supporting member when the recording medium is attached on the supporting member. In addition, a functional layer (e.g., a recording layer and a protective layer) to be disposed on a base material of the recording medium can be thickly formed, leading to improved durability.

The average thickness of the recording medium can be measured with, for example, a caliper, a contact film thickness gauge, or a step gauge.

In the present invention, the average height A of the positioning portion and the average thickness B of the recording medium preferably satisfy the following expression: $A > B / 20$, more preferably satisfy the following expression: $A > B / 10$, and further preferably satisfy the following expression: $A > B / 5$. In the case where the average height of the positioning portion is higher than a certain height depending on the average thickness of the recording medium, as presented by the expression: $A > B / 20$, the recording medium can easily be pressed against the positioning portion to thereby be positioned. In addition, the recording medium can be prevented from being damaged or peeled due to a human hand or a tool entered from outside the recording medium.

The maximum distance between the edge portion of the recording medium and the positioning portion is preferably 10 μm or more, more preferably 20 μm or more, further preferably 30 μm or more, but preferably 1,000 μm or less, more preferably 500 μm or less, further preferably 300 μm or less. The maximum distance between the recording medium and the positioning portion in a range of 10 μm or more but 1,000 μm or less enables the recording medium to be attached accurately without mispositioning within appropriate attachment time.

An allowable range of the mispositioning varies depending on, for example, image information to be recorded.

However, a mispositioning distance is preferably 10 mm or shorter, more preferably 1 mm or shorter, further preferably 0.1 mm or shorter, and a mispositioning angle is preferably 20° or smaller, more preferably 2° or smaller, further preferably 0.2° or smaller.

The maximum distance between the recording medium and the positioning portion can be determined with, for example, a caliper, an optical microscope, or an electron microscope.

The recording medium can be aligned with the positioning portion by pressing one side of the recording medium against the positioning portion or by visually attaching the recording medium on the positioning portion using the positioning portion as the mark.

The average height A of the positioning portion and the maximum distance C between the edge portion of the recording medium and the positioning portion preferably satisfy the following expression: A < 20 x C, more preferably satisfy the following expression: A < 10 x C, and further preferably satisfy the following expression: A < 7 x C.

In the case where the maximum distance between the edge portion of the recording medium and the positioning portion is larger than a certain distance depending on the average height A of the positioning portion, the height of the positioning portion can be prevented from obstructing attachment of the recording medium.

A method for attaching the recording medium on the surface of the supporting member is not particularly limited and may be appropriately selected depending on the intended purpose. For example, the recording medium may be attached on the surface of the supporting member using a pressing roller, a spatula, a hand, or a labeler. Of these, the spatula or the pressing roller may be preferably used since a wide area can be easily attached with pressure equal to or greater than a certain pressure.

<Recording medium>

The recording medium is not particularly limited and may be appropriately selected depending on the intended purpose, so long as an image is recorded and/or erased on the recording medium after the recording medium is attached on the surface of the supporting member, and examples thereof include a thermoreversible recording medium on which image recording and image erasing are repeated, a heat-sensitive recording medium on which an image is recorded with heat only once, and ink absorbing paper.

Of these, the thermoreversible recording medium is preferable since image recording and image erasing can be repeated.

Upon attachment of the thermoreversible recording medium, the medium may gradually be peeled from an edge portion thereof due to heat generated during repeated recording and erasing. Therefore, especially when the thermoreversible recording medium is used repeatedly, the thermoreversible recording medium is desirably attached to an object with adhesion force equal to or stronger than the predetermined adhesion force.

Especially when recording and erasing are performed repeatedly in a non-contact manner, for example, using a laser, the recording medium easily peels since lower pressure is applied during repeated recording and erasing than that of applied when recording and erasing are performed repeatedly in a contact manner, for example, using a thermal head.

Especially when the image erasing is performed on an entire surface of the thermoreversible recording medium, the thermoreversible recording medium easily peels since the thermoreversible recording medium is heated even at the edge portion thereof.

In the case where a layer disposed on the support shrinks easier than the support in the thermoreversible recording medium, a face curl may be caused in the thermoreversible recording medium. In this case, peeling occurs with higher possibility.

The larger the sum of thickness of layers disposed on the support is, the easier the face curl occurs. The face curl frequently occurs when the sum is 10 $\mu$m or more, more frequently occurs when the sum is 15 $\mu$m or more, and much more frequently occurs when the sum is 20 $\mu$m or more.

«Image»

An image is not particularly limited and may be appropriately selected depending on the intended purpose, so long as it is visible information, and examples thereof include characters, signs, lines, graphics, barcodes, and two-dimensional codes that indicate information concerning contents and a destination of goods contained in a container, and the number of use of the thermoreversible recording medium.

Particularly, for example, barcodes, two-dimensional codes, and OCR fonts are visible information capable of being read by a dedicated reading device, and may also be referred to as "read image." Additionally, an image other than the read image may be hereinafter referred to as "characters, etc." -Reading device-

A reading device used in the present invention is not particularly limited and may be appropriately selected depending on the intended purpose, so long as it has a function of irradiating an image recorded on the recording medium with light, and electrically reading information included in the image based on intensity of the light reflected from the image. Examples thereof include a barcode reader, a two-dimensional code reader, and an OCR reader. The barcode reader, the two-dimensional code reader, and the OCR reader are devices configured to read a barcode symbol, a two-dimensional code symbol, and an OCR font, respectively, and each includes a scanner configured to convert optical information to electric information, and a decoder configured to convert electric information to character codes.

«Thermoreversible recording medium»

The thermoreversible recording medium includes a support; and a thermoreversible recording layer on the support; and, if necessary, may further include appropriately selected other layers, such as a photothermal converting layer, a first oxygen barrier layer, a second oxygen barrier layer, a UV ray absorbing layer, a back layer, a protective layer, an intermediate layer, an undercoat layer, an adhesive layer, a bonding agent layer, a coloring layer, an air layer, and a light reflective layer. Each of these layers may have a single layer structure or a laminate structure.

Note that, a photothermal converting material may be contained in at least one of the thermoreversible recording layer and a layer adjacent to the thermoreversible recording layer. In the case where the photothermal converting material is contained in the thermoreversible recording layer, the thermoreversible recording layer also serves as the photothermal converting layer. In order to reduce energy loss of the laser light having a certain wavelength to be irradiated, a layer disposed on the photothermal converting layer is preferably composed of a material that is less likely to absorb light having the certain wavelength.

-Support-

A shape, structure, and size of the support are not particularly limited and may be appropriately selected depending on the intended purpose. Examples of the shape include a plate shape. The structure may be a single layer structure or a laminate structure. The size may be appropriately selected depending on the size of the thermoreversible recording medium.

-Thermoreversible recording layer-

The thermoreversible recording layer contains a leuco dye, which is an electron-donating coloring compound, and a color developer, which is an electron-accepting compound. The thermoreversible recording layer is a thermoreversible recording layer configured to reversibly change in its color tone upon application of heat. The thermoreversible recording layer contains a binder resin, and, if necessary, may further contain other components.

The leuco dye, which is an electron-donating coloring compound that reversibly changes in its color tone upon application of heat, and the reversible color developer, which is an electron-accepting compound, are materials which can realize reversible visual changes according to changes in temperature. The leuco dye and the color developer can reversibly change between a colored state and a decolored state according to a heating temperature and a cooling speed after heating.

-Leuco dye-

The leuco dye itself is a colorless or light-colored precursor. The leuco dye is not particularly limited and may be appropriately selected from those known in the art. Examples thereof include a triphenylmethane phthalide leuco compound, a triallyl methane leuco compound, a fluoran leuco compound, a phenothiazine leuco compound, a thiofluoran leuco compound, a xanthene leuco compound, an indophthalyl leuco compound, a spiropyran leuco compound, an azaphthalide leuco compound, a chromenopyrazole leuco compound, a methine leuco compound, a rhodamine anilinolactam leuco compound, a rhodamine lactam leuco compound, a quinazoline leuco compound, a diazaxanthene leuco compound, and a bislactone leuco compound. These may be used alone or in combination. Of these, a fluoran leuco dye or a phthalide leuco dye is particularly preferable from the viewpoints of excellent coloring-decoloring properties, hue, and preservability.

-Reversible color developer-

The reversible color developer is not particularly limited and may be appropriately selected depending on the intended purpose, so long as it can be reversibly colored and decolored using heat. Example thereof includes a compound containing at least one of (1) a structure having an ability of coloring the leuco dye (e.g., a phenolic hydroxyl group, a carboxylic acid group, and a phosphoric acid group) and (2) a structure for controlling aggregation force between molecules (e.g., a structure linked with a long-chain hydrocarbon group) in a molecule thereof. Note that, the long-chain hydrocarbon group may be linked via a bivalent or higher linking group containing a hetero atom, and the long-chain hydrocarbon group itself may contain at least one of the linking group as described above and an aromatic group.

The (1) structure having an ability of coloring the leuco dye is particularly preferably a phenolic structure.

The (2) structure for controlling aggregation force between molecules is preferably a long-chain hydrocarbon group having 8 or more carbon atoms, more preferably 11 or more carbon atoms. The long-chain hydrocarbon group has preferably 40 or less carbon atoms, more preferably 30 or less carbon atoms.

The electron-accepting compound (color developer) is preferably used in combination with a compound containing at least one of a -NHCO- group and an -OCONH- group in a molecule thereof as a decoloration accelerator. Use of these compounds in combination can induce an intermolecular interaction between the decoloration accelerator and the color developer in the process for shifting toward a decolored state, to thereby improve coloring and decoloring properties.

The decoloration accelerator is not particularly limited and may be appropriately selected depending on the intended purpose.

The thermoreversible recording layer contains a binder resin, and, if necessary, may further contain various additives for improving or controlling coatability or coloring and decoloring properties of the thermoreversible recording layer. Examples of the additives include a surfactant, a conducting agent, filler, an antioxidant, a photostabilizer, a coloring stabilizer, and a decoloring accelerator.

--Binder resin--

The binder resin is not particularly limited and may be appropriately selected depending on the intended purpose, so long as it can bind the thermoreversible recording layer on the support. Conventionally known resins can be used alone or in combination as the binder resin. Of these, preferable is a resin curable by heat, UV rays, or electron beams from the viewpoint of improvement in durability for repeated use, and particularly preferable is a thermosetting resin cross-linked using an isocyanate compound as a crosslinking agent.

-Photothermal converting layer-

The photothermal converting layer contains a photothermal converting material which has a function of highly efficiently absorbing the laser light to generate heat. The photothermal converting material may be contained in at least one of the thermoreversible recording layer and a layer adjacent to the thermoreversible recording layer. In the case where the photothermal converting material is contained in the thermoreversible recording layer, the thermoreversible recording layer also serves as the photothermal converting layer. A barrier layer may be formed between the thermoreversible recording layer and the photothermal converting layer for the purpose of preventing interaction between the thermoreversible recording layer and the photothermal converting layer. The barrier layer is preferably a layer composed of a material being excellent in heat conductivity. A layer disposed between the thermoreversible recording layer and the photothermal converting layer is appropriately selected depending on the intended purpose, and is not limited those mentioned above.

The photothermal converting material is roughly classified into an inorganic material and an organic material.

The inorganic material is not particularly limited and may be appropriately selected depending on the intended purpose, and examples thereof include: carbon black; a metal (e.g., Ge, Bi, In, Te, Se, and Cr) or a semimetal; and alloy, metal boride particles, and metal oxide particles thereof.

Examples of the metal boride and the metal oxide include hexaboride, a tungsten oxide compound, antimony-doped tin oxide (ATO), tin-doped indium oxide (ITO), and zinc antimonate.

The organic material is not particularly limited, and may be appropriately selected from various dyes depending on a wavelength of light to be absorbed. In the case where a semiconductor laser is used as a light source, a near infrared-absorbing pigment having an absorption peak in the wavelength range of from 700 nm through 1,600 nm is used. Specific examples thereof include a cyanine pigment, a quinine pigment, a quinoline derivative of indonaphthol, a phenylene diamine nickel complex, and a phthalocyanine compound. Of these, a photothermal converting material being excellent in heat resistance is preferably selected for repeated image processing. In this point of view, the phthalocyanine compound is particularly preferable.

The near infrared-absorbing pigment may be used alone or in combination.

In the case where the photothermal converting layer is disposed, the photothermal converting material is typically used in combination with a resin. The resin used for the photothermal converting layer is not particularly limited and may be appropriately selected from resins known in the art, so long as the resin can hold the inorganic material or the organic material. Of these, a thermoplastic resin or a thermosetting resin is preferable. Those usable as a binder resin in the thermoreversible recording layer can be suitably used. Of these, preferable is a resin curable by heat, UV rays, or electron beams from the viewpoint of improvement in durability for repeated use, and particularly preferable is a thermosetting resin cross-linked using an isocyanate compound as a crosslinking agent.

-First and second oxygen barrier layers-

The first and second oxygen barrier layers are preferably respectively disposed on top and bottom surfaces of the thermoreversible recording layer for the purpose of preventing oxygen from entering the thermoreversible recording layer to thereby prevent photodeterioration of the leuco dye in the thermoreversible recording layer. The first oxygen barrier layer may be disposed on a surface of the support where the thermoreversible recording layer is not disposed, and the second oxygen barrier layer may be disposed on the thermoreversible recording layer. Alternatively, the first oxygen barrier layer may be disposed between the support and the thermoreversible recording layer, and the second oxygen barrier layer may be disposed on the thermoreversible recording layer.

-Protective layer-

The thermoreversible recording medium for use in the present invention preferably includes a protective layer disposed on the thermoreversible recording layer for the purpose of protecting the thermoreversible recording layer. The protective layer is not particularly limited and may be appropriately selected depending on the intended purpose. The protective layer may be disposed on one or more layers, but is preferably disposed on an externally exposed outermost surface of the thermoreversible recording medium.

-UV ray absorbing layer-

In the present invention, the UV ray absorbing layer is preferably disposed on an a surface of the thermoreversible recording layer opposite to a surface where the support is disposed, for the purpose of preventing erasion failure of the leuco dye in the thermoreversible recording layer caused by coloration and photodeterioration by UV rays. The UV ray absorbing layer can improve light resistance of the recording medium. A thickness of the UV ray absorbing layer is appropriately selected so that the UV ray absorbing layer absorbs UV rays of 390 nm or shorter.

-Intermediate layer-

In the present invention, the intermediate layer is preferably disposed between the thermoreversible recording layer and the protective layer for the purpose of improving adhesion between the thermoreversible recording layer and the protective layer, preventing deterioration of the thermoreversible recording layer due to application of the protective layer, and preventing the additives contained in the protective layer from migrating into the thermoreversible recording layer. The intermediate layer can improve preservability of a colored image.

-Under layer-

In the present invention, the under layer may be disposed between the thermoreversible recording layer and the support for the purpose of effectively utilizing applied heat to thereby increase sensitivity, improving adhesion between the support and the thermoreversible recording layer, or preventing permeation of a material contained in the thermoreversible recording layer into the support.
The under layer contains hollow particles and optionally a binder resin; and, if necessary, may further contain other components.

-Back layer-

In the present invention, the back layer may be disposed on a surface of the support opposite to a surface where the thermoreversible recording layer is disposed, for the purpose of preventing the thermoreversible recording medium from curling or charging, and improving conveyance properties of the thermoreversible recording medium.
The back layer contains a binder resin; and, if necessary, may further contain other components, such as filler, conductive filler, a lubricant, and a color pigment.

-Adhesive layer or bonding agent layer-

In the present invention, the adhesive layer or bonding agent layer may be disposed on a surface of the support opposite to a surface where the thermoreversible recording layer is disposed, to thereby use the thermoreversible recording medium as a thermoreversible recording label. As for a material of the adhesive layer or bonding agent layer, commonly used materials can be used.

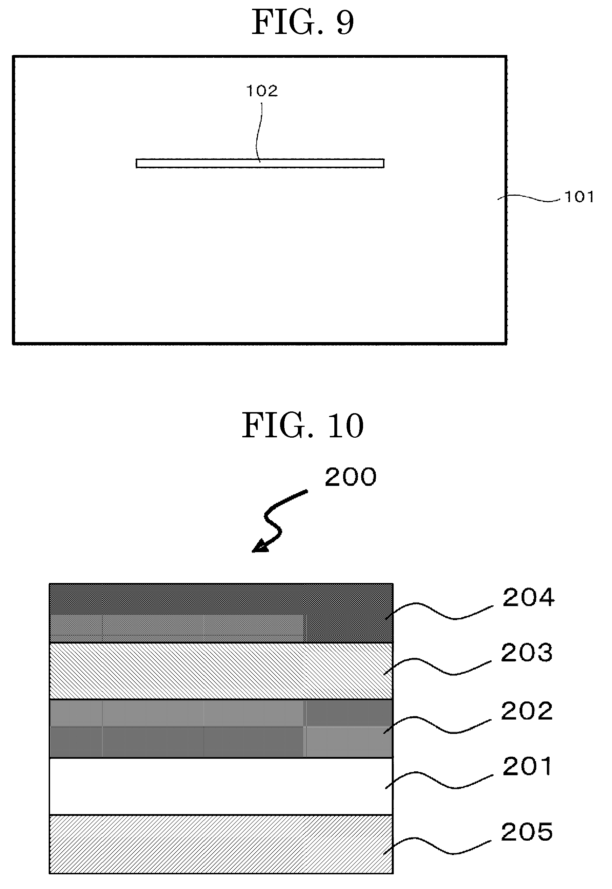

As illustrated in FIG. 10, a layer configuration of one embodiment of the thermoreversible recording medium 200 includes a support 201; a thermoreversible recording layer 202 containing a photothermal converting material, a first oxygen barrier layer 203, and a UV ray absorbing layer 204 disposed in this order on the support 201; and a second oxygen barrier layer 205 on a surface of the support 201 where the thermoreversible recording layer is not disposed. Note that, the protective layer may be formed on the outermost surface layer, although it is not illustrated in the drawing.

<Supporting member>

A shape, size, material, and structure of the supporting member are not particularly limited and may be appropriately selected depending on the intended purpose.

The size and the shape of the supporting member are not particularly limited and may be appropriately selected depending on the intended purpose.

The material of the supporting member is not particularly limited and may be appropriately selected depending on the intended purpose, and examples thereof include wood, paper, cardboard, a resin, a metal, and glass. Of these, the resin is particularly preferable from the viewpoints of formability, durability, and its light weight.

The resin is not particularly limited and may be appropriately selected depending on the intended purpose, and examples thereof include a polyethylene resin, a polypropylene resin, a vinyl chloride resin, a polystyrene resin, an AS resin, an ABS resin, a polyethylene terephthalate resin, an acrylic resin, a polyvinyl alcohol resin, a vinylidene chloride resin, a polycarbonate resin, a polyamide resin, an acetal resin, a polybutylene terephthalate resin, a fluororesin, a phenolic resin, a melamine resin, a urea resin, a polyurethane resin, an epoxy resin, and an unsaturated polyester resin. These may be used alone or in combination. Of these, the polypropylene resin is preferable from the viewpoints of chemical resistance, mechanical strength, and heat resistance.

The supporting member is not particularly limited and may be appropriately selected depending on the intended purpose, so long as the recording medium can be attached on its surface, and examples thereof include a conveying container, a work in progress, and an industrial product. Of these, the conveying container is preferable since it can store a plurality of objects inside thereof.

Specific examples of the conveying container include a plastic container and cardboard box. Of these, the plastic container is preferable since the positioning portion can be formed by injection molding.

In the case where a material used for the plastic container is transparent, a colorant is preferably added. With a transparent plastic container without the colorant, contents in the plastic container may be visible from outside. When the contents in the plastic container can be visible from outside, invasion of privacy or information leakage may be occurred depending on the contents.

-Colorant-

The colorant includes a pigment and a dye. Of these, a pigment being excellent in weather resistance is preferable since a plastic container is repeatedly used in the conveyor line system.

The pigment is not particularly limited and may be appropriately selected depending on the intended purpose, and examples thereof include a phthalocyanine pigment, an isoindolinone pigment, an isoindoline pigment, a quinacridone pigment, a perylene pigment, an azo-pigment, an anthraquinone pigment, titanium oxide, cobalt blue, ultramarine, carbon black, iron oxide, cadmium yellow, cadmium red, chrome yellow, and chromium oxide. These may be used alone or in combination.

For example, the colorant can be kneaded with the resin, when the plastic container is shaped. An amount of the colorant added to the resin may be appropriately selected depending on the intended purpose, but the colorant is preferably added so that contents in the plastic container is invisible from outside.

A method for shaping the plastic container is not particularly limited and may be appropriately selected depending on the intended purpose, and examples thereof include extrusion molding, blow molding, vacuum molding, calendar molding, and injection molding.

A display image is preferably disposed on a surface of the supporting member. The display image can improve usability and safety of the supporting member. Examples of the display image include a company logo, an alarm display, instructions, and a bar code image.

<Positioning portion>

The positioning portion is formed on the surface of the supporting member and serves as the mark for attaching the recording medium.

A shape, arrangement, and structure of the positioning portion are not particularly limited and may be appropriately selected depending on the intended purpose.

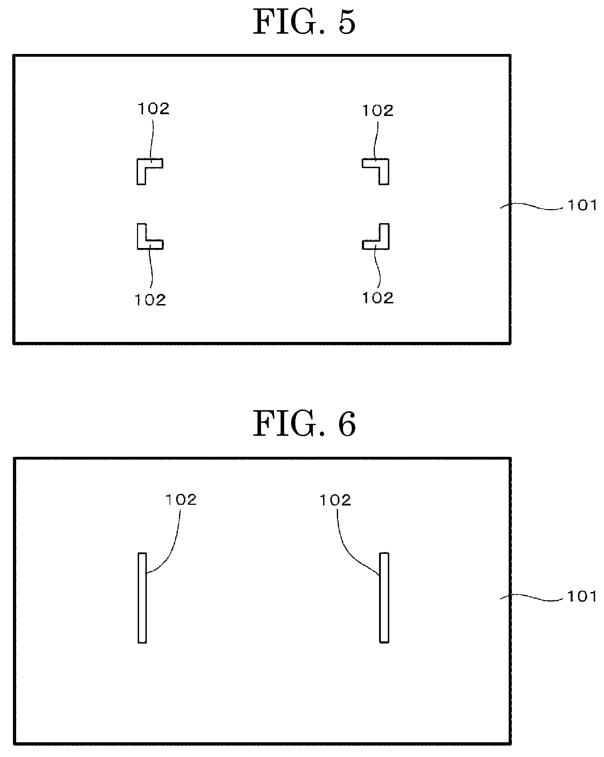

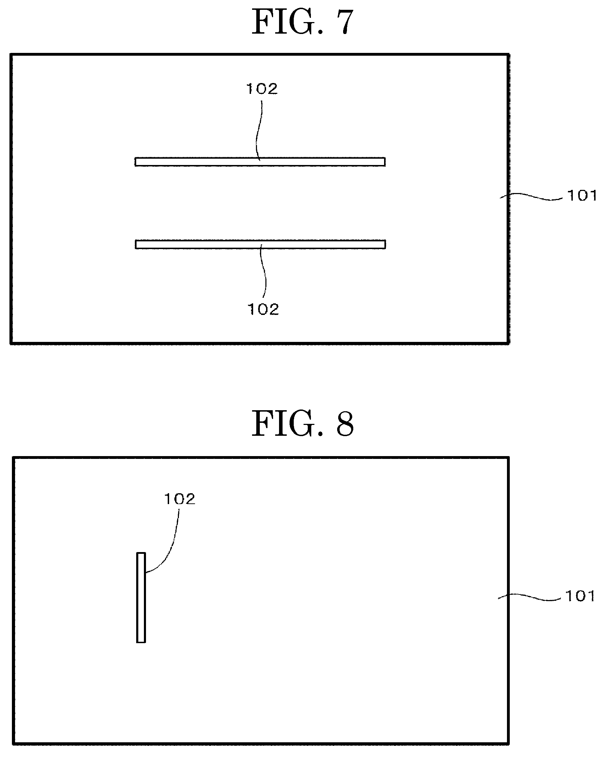

Examples of the shape and the arrangement of the positioning portion include an aspect in which a rectangular positioning portion 102 is formed along every side of a recording medium to be attached (not illustrated) on a surface of a supporting member 101 as illustrated in FIG. 4, and an aspect in which a positioning portion 102 is formed along a certain side of a recording medium to be attached (not illustrated) on a surface of a supporting member 101 as illustrated in FIGs. 6 to 9. Note that, an aspect in which positioning portions 102 are formed along two sides of a recording medium to be attached (not illustrated) on a surface of a supporting member 101 as illustrated in FIGs. 6 and 7, as well as an aspect in which a positioning portion 102 is formed along one side of a recording medium to be attached (not illustrated) on a surface of a supporting member 101 as illustrated in FIGs. 8 and 9 are also within the scope of this invention. Additional example of the shape and the arrangement of the positioning portion include an aspect in which L-shaped positioning portions 102 are formed at four corners of a recording medium to be attached (not illustrated) on a surface of a supporting member 101 as illustrated in FIG. 5.

Of these, preferable is the aspect in which a positioning portion 102 is formed along every side of a recording medium to be attached (not illustrated), as illustrated in FIG. 4. In this aspect, the recording medium can be prevented from being damaged or peeled due to a human hand or a tool entered from outside the recording medium.

The structure of the positioning portion is not particularly limited and may be appropriately selected depending on the intended purpose.

A method for forming the positioning portion is not particularly limited and may be appropriately selected depending on the intended purpose, and examples thereof include a method in which the positioning portion is formed simultaneously with shaping the supporting member using the resin, a method in which a piece of tape (e.g., fabric tape and paper tape) is attached on the surface of the supporting member, and a method in which an ink is applied on the surface of the supporting member. Of these, preferable is the method in which the positioning portion is formed simultaneously with shaping the supporting member using the resin since the positioning portion can be easily formed at the predetermined position accurately and excellent durability and measuring performance can be achieved.

The resin is not particularly limited and may be appropriately selected depending on the intended purpose, and examples thereof include a polyethylene resin, a polypropylene resin, a vinyl chloride resin, a polystyrene resin, an AS resin, an ABS resin, a polyethylene terephthalate resin, an acrylic resin, a polyvinyl alcohol resin, a vinylidene chloride resin, a polycarbonate resin, a polyamide resin, an acetal resin, a polybutylene terephthalate resin, a fluororesin, a phenolic resin, a melamine resin, a urea resin, a polyurethane resin, an epoxy resin, and an unsaturated polyester resin. These may be used alone or in combination. Of these, the polypropylene resin and the polyethylene terephthalate resin are preferable from the viewpoints of chemical resistance, mechanical strength, and heat resistance.

A method for shaping the supporting member using the resin is not particularly limited and may be appropriately selected depending on the intended purpose, and examples thereof include extrusion molding, blow molding, vacuum molding, calendar molding, and injection molding.

<Other members>

Other members may be coated with a surface protecting agent for the purpose of preventing scratches on the surface, a glossing agent for the purpose of preventing scratches or scrapes, a matting agent, an antifouling agent, or an anti-rust agent, or processed with surface texturing for the purpose of improving releasability of a label.

(Conveyor line system)

A conveyor line system suitably used in the present invention will be described hereinafter, but shall not be construed as to limit a scope of the present invention in any way.

In a conveyor line system according to the present invention, the structure according to the present invention is used as the conveying container. The conveyor line system preferably includes an image processing device; and, if necessary, further includes other units.

The conveying container is the same as those described above for the supporting member.

The conveyor line system is a system configured to irradiate the recording medium attached on the conveying container moved on a conveyor line with laser light to thereby form an image that indicate, for example, information concerning contents and a delivery destination of goods contained in a conveying container, date, and a management number.

The laser light is irradiated when the recording medium attached on the conveying container moved on the conveyor line reaches the predetermined position. The predetermined position is a position where only the recording medium is irradiated with laser light by the image processing device. During this operation, in order to obtain a high quality image, the recording medium is preferably irradiated with laser light with at least one of output of a laser light to be emitted, scanning speed, and beam diameter being controlled based on a result obtained by a temperature sensor for detecting a temperature of the recording medium or ambient temperature and a distance sensor for detecting a distance between the recording medium and the image processing device.

The conveyor line system of the present invention is suitably used, for example, for a physical distribution management system, a delivery management system, a storage management system, or a process management system in a factory.

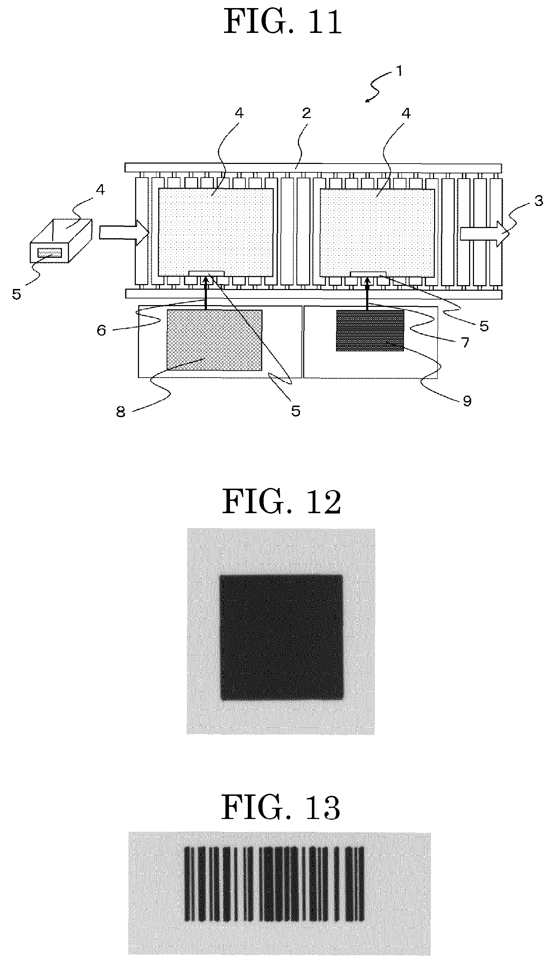

As illustrated in FIG. 11, an image erasing device 8 and an image recording device 9 are preferably disposed in this order from the upstream side of a conveyor line 2. In addition, the image erasing device 8 and the image recording device 9 are preferably disposed adjacent to each other. In FIG. 11, reference numeral 1 denotes a conveyor line system, reference numeral 3 denotes a conveying direction of the conveyor line, reference numeral 4 denotes a conveying container, reference numeral 5 denotes a recording medium, reference numeral 6 denotes laser light emitted from the image erasing device, and reference numeral 7 denotes laser light emitted from the image recording device.

A device configured to subject the recording medium to image processing is not particularly limited and may be appropriately selected depending on the intended purpose, and examples thereof include a laser, a thermal head, and an ink head. Of these, preferable is the laser since the laser may process an image in a non-contact manner.

<Image processing device>

The image processing device, which is suitably used in the present invention, will be described in detail hereinafter, but shall not be construed as to limit a scope of the present invention in any way.

The image processing device includes at least one of an image recording device and an image erasing device. In the case where the image processing device includes both of the image recording device and the image erasing device, they may be an integrated unit or separate units.

«Image recording device»

The image recording device is not particularly limited and may be appropriately selected depending on the intended purpose, so long as the image recording device includes an image recording unit configured to record an image using a laser light.

The image recording device includes a laser light emitting unit; and, if necessary, further includes appropriately selected other members.

In the present invention, a wavelength of a laser light to be emitted should be selected so that a thermoreversible recording medium on which an image is formed highly efficiently absorbs the laser light. For example, the thermoreversible recording medium used for the present invention contains a photothermal converting material which has a function of highly efficiently absorbing a laser light to generate heat. Therefore, the wavelength of the laser light to be emitted should be selected so that the photothermal converting material to be contained absorbs the laser light at higher efficiency than those of all other materials.

-Laser light emitting unit-

The laser light emitting unit may be appropriately selected depending on the intended purpose. Examples thereof include a semiconductor laser, a solid laser, and a fiber laser. Of these, the semiconductor laser is particularly preferable from the viewpoints of wide selectability of wavelengths, and a small laser light source which can realize down-sizing of a device and reduce cost.

The wavelength of the semiconductor laser light, solid laser light, or fiber laser light emitted from the laser light emitting unit is preferably 700 nm or longer, more preferably 720 nm or longer, even more preferably 750 nm or longer. The upper limit of the wavelength of the laser light may be appropriately selected depending on the intended purpose, but is preferably 1,600 nm or shorter, more preferably 1,300 nm or shorter, particularly preferably 1,200 nm or shorter.

The wavelength of the laser light shorter than 700 nm causes the following problem: image contrast is reduced in the visible light region during image recording on the thermoreversible recording medium or the thermoreversible recording medium is disadvantageously colored. In the UV ray region, which has much shorter wavelengths, there is a problem that the thermoreversible recording medium tends to be deteriorated. Moreover, the photothermal converting material to be added to the thermoreversible recording medium needs to have a high decomposition temperature in order to ensure durability for repeated image processing. Therefore, in the case where an organic dye is used as the photothermal converting material, it is difficult to obtain the photothermal converting material having a high decomposition temperature and long absorption wavelengths. From the reasons as mentioned, the wavelength of the laser light is preferably 1,600 nm or shorter.

The output of the laser light to be emitted during an image recording step in the image recording device is not particularly limited and may be appropriately selected depending on the intended purpose, but is preferably 1 W or greater, more preferably 3 W or greater, particularly preferably 5 W or greater. When the output of the laser light is less than 1 W, it takes a long time to record an image. However, when it is attempted to reduce the time for image recording, the output is insufficient.

The upper limit of the output of the laser light is not particularly limited and may be appropriately selected depending on the intended purpose, but is preferably 200 W or lower, more preferably 150 W or lower, particularly preferably 100 W or lower. When the upper limit of the output of the laser light is greater than 200 W, the laser device may need to be larger.

The scanning speed of the laser to be emitted during the image recording step is not particularly limited and may be appropriately selected depending on the intended purpose, but is preferably 100 mm/s or greater, more preferably 300 mm/s or greater, particularly preferably 500 mm/s or greater. When the scanning speed is less than 100 mm/s, it may take a long time to record an image.

The upper limit of the scanning speed of the laser light is not particularly limited and may be appropriately selected depending on the intended purpose, but is preferably 15,000 mm/s or less, more preferably 10,000 mm/s or less, particularly preferably 8,000 mm/s or less. When the upper limit of the scanning speed is greater than 15,000 mm/s, it may be difficult to form a uniform image.

The spot diameter of the laser light to be emitted during the image recording step is not particularly limited and may be appropriately selected depending on the intended purpose, but is preferably 0.02 mm or greater, more preferably 0.1 mm or greater, particularly preferably 0.15 mm or greater. When the spot diameter is less than 0.02 mm, a line width of an image is narrowed, leading to poor visibility.

The upper limit of the spot diameter of the laser light is not particularly limited and may be appropriately selected depending on the intended purpose, but is preferably 3.0 mm or less, more preferably 2.5 mm or less, particularly preferably 2.0 mm or less. When the spot diameter is greater than 3.0 mm, a line width of an image is widened, so that adjacent lines are overlapped. As a result, it may become impossible to record a small image.

Other factors of the image recording device are not particularly limited, and those described in the present invention and those known in the art can be applied.

«Image erasing device»

The image erasing device configured to heat the thermoreversible recording medium to erase an image thereon is not particularly limited and may be appropriately selected depending on the intended purpose, and examples thereof include a non-contact heating device using, for example, laser light, hot air, warm water, or an IR heater, and a contact heating device, for example, using a thermal head, a hot stamp, a heat block, or a heat roller. Of these, particularly preferable is an image erasing device in which the thermoreversible recording medium is irradiated with laser light by the laser light emitting unit.

The laser light emitting unit is not particularly limited and may be appropriately selected depending on the intended purpose, and examples thereof include a semiconductor laser, a solid laser, a fiber laser, and a $CO_2$ laser. Of these, the semiconductor laser is particularly preferable from the viewpoints of wide selectability of wavelengths, and a small laser light source which can realize down-sizing of a device and reduce cost.

In order to uniformly erase an image within a short period, the image erasing device includes a semiconductor laser array, a width-direction collimating unit, and a length-direction light distribution controlling unit, preferably further includes a beam size adjusting unit, and a scanning unit, and further preferably further includes other units, if necessary.

EXAMPLES

Examples of the present invention will be described hereinafter, but shall not be construed as to limit a scope of the present invention in any way.

(Example 1)

Ricoh rewritable laser medium (RLM-100L, average thickness: 210 $\mu$m, manufactured by Ricoh Company, Ltd.) serving as a recording medium was attached on a positioning portion of a conveying container using the positioning portion as a mark and by means of a pressing roller (PRESSING ROLLER SA-1003-B, manufactured by TESTER SANGYO CO,. LTD.) so that the maximum distance between the recording medium and the positioning portion was 100 $\mu$m. The conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and was provided with the positioning portion (average height: 200 $\mu$m) which was integrally molded by injection molding as illustrated in FIG. 5. In the evaluation for mispositioning described below, the recording medium was able to be attached at the predetermined position without mispositioning. The attaching time of the recording medium was 4 seconds. Results are presented in Table 2.

Then, peeling, image density of a solid image, and barcode readability were evaluated as follows. Results are presented in Table 2.

<Measurement of average height of positioning portion>

Randomly selected three positions on the positioning portion were measured for thickness using a digital caliper (MICROMETER MDL-25MX, manufactured by Mitutoyo Corporation), which were then averaged to determine an average thickness of the positioning portion.

Randomly selected three positions on a peripheral portion of the positioning portion were measured for thickness using a digital caliper (MICROMETER MDL-25MX, manufactured by Mitutoyo Corporation), which were then averaged to determine an average thickness of the peripheral portion. An average height of the positioning portion was determined by subtracting the average thickness of the peripheral portion from the average thickness of the positioning portion.

<Measurement of average thickness of recording medium>

Randomly selected three positions on the recording medium attached on the conveying container were measured for thickness using a digital caliper (MICROMETER MDL-25MX, manufactured by Mitutoyo Corporation), which were then averaged to determine an average thickness of the recording medium.

Randomly selected three positions on a peripheral portion of the recording medium were measured for thickness using a digital caliper (MICROMETER MDL-25MX, manufactured by Mitutoyo Corporation), which were then averaged to determine an average thickness of the peripheral portion. An average thickness of the recording medium was determined by subtracting the average thickness of the peripheral portion from the average thickness of the recording medium attached on the conveying container.

<Maximum distance between edge portion of recording medium and positioning portion>

The maximum distance between an edge portion of the recording medium and the positioning portion was measured by an optical microscope (DIGITAL MICROSCOPE VHX-5000, manufactured by KEYENCE CORPORATION).

<Evaluation for mispositioning>

The mispositioning was evaluated based on a mispositioning distance and a mispositioning angle described below.

The mispositioning distance was determined as a distance (mm) between a midpoint of a side of the recording medium and a midpoint of a predetermined side of the positioning portion.

The mispositioning angle was determined as an angle (°) between a side of the recording medium and a predetermined side of the positioning portion.

<Attaching time of recording medium>

In the case where the positioning portion had previously been disposed on the conveying container through, for example, injection molding, a period of time it took to attach the recording medium on the conveying container was determined as the attaching time of the recording medium. On the other hand, in the case where the positioning portion had not been disposed on the conveying container, the sum of a period of time it took to form the positioning portion on the conveying container and a period of time it took to attach the recording medium on the conveying container was determined as the attaching time of the recording medium.

<Evaluation for peeling>

Then, Ricoh rewritable laser marker (LDM-200-110, manufactured by Ricoh Company, Ltd.) was used to record a solid square image (height: 8.0 mm, width: 8.0 mm) at laser output of 18.2 W, a scanning speed of 3,000 mm/s, and an irradiation distance of 150 mm.

Then, Ricoh rewritable laser eraser (LDE-800-A, manufactured by Ricoh Company, Ltd.) was used to erase the entire surface of the recording medium at laser output of 71.4 W, a scanning speed of 45 mm/s, and an irradiation distance of 110 mm.

Laser irradiation by the Ricoh rewritable laser marker (LDM-200-110, manufactured by Ricoh Company, Ltd.)

and laser irradiation by the Ricoh rewritable laser eraser (LDE-800-A) were respectively performed once under the above conditions, which was determined as one rewriting operation. The rewriting operation was repeated 1,000 times in the same manner as the above.

A length of the edge portion of the recording medium peeled from the PP resin plate was measured using a caliper (DIGIMATIC CALIPER CD-S20C, manufactured by Mitutoyo Corporation) after 1,000 times repetition of image recording and image erasing. This procedure was repeated at different 10 positions. The measured lengths were averaged, which was determined as peeling (mm). As a result, no peeling was observed.

The peeling refers to a state in which at least part of the recording medium is completely separated from the supporting member.

<Evaluation for enlargement of peeling, image density, and barcode readability>

A blue polypropylene (PP) resin plate to which the recording medium after 1,000 times repetition of image recording and image erasing had been attached was detached from the conveying container. The blue polypropylene resin plate and a rule (STAINLESS STEEL RULE 14001, manufactured by Shinwa Rules Co., Ltd., total length x width x thickness: 175 mm x 15 mm x 0.5 mm) were mounted on a abrasion tester (ABRASION TESTER FR-2, manufactured by Suga Test Instruments Co., Ltd.) so that an angle between the blue polypropylene resin plate and the rule was 30° and a middle point of a side of the recording medium was in contact with a middle point of the rule. Then, the abrasion tester was used to rub the recording medium with the rule back and forth 10 times. After rubbing back and forth 10 times, a peeled length from the PP resin plate in a rubbing direction of the middle point of the side of the recording medium which had been rubbed with the rule was measured using a caliper (DIGIMATIC CALIPER CD-S20C, manufactured by Mitutoyo Corporation). As a result, no peeling was observed. Then, the Ricoh rewritable laser eraser (LDE-800-A, manufactured by Ricoh Company, Ltd.) was used to erase the entire surface of the recording medium at laser output of 71.4 W, a scanning speed of 45 mm/s, and an irradiation distance of 110 mm. Two seconds after the image erasing, the Ricoh rewritable laser marker (LDM-200-110, manufactured by Ricoh Company, Ltd.) was used to record a solid square image (height: 8.0 mm, width: 8.0 mm) and a one-dimensional barcode at laser output of 18.2 W, a scanning speed of 3,000 mm/s, and an irradiation distance of 150 mm. A scan image of the solid image is illustrated in FIG. 12 and a scan image of the barcode is illustrated in FIG. 13.

-Image density-

A densitometer (X-RITE 938, manufactured by X-Rite Inc.) was used to measure the solid image for image density, which was found to be 1.65.

-Barcode readability-

A barcode scanner (THIR-6780U, manufactured by MARS TOHKEN SOLUTION CO.LTD.) was used to read the barcode to evaluate according to the following criteria.

[Barcode readability]

A: Good readability
B: Unreadable

(Example 2)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 190 $\mu$m) which was integrally molded with the conveying container by injection molding.

As a result, the attaching time of the recording medium was 4 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.64 and the barcode readability was good. Results are presented in Table 2.

(Example 3)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 170 $\mu$m) which was integrally molded with the conveying container by injection molding.

As a result, the attaching time of the recording medium was 4 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 4)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 8 $\mu$m) which was integrally molded with the conveying container by injection molding.

As a result, the attaching time of the recording medium was 9 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.66 and the barcode readability was good. Results are presented in Table 2.

(Example 5)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 15 $\mu$m) which was integrally molded with the conveying container by injection molding.

As a result, the attaching time of the recording medium was 8 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 6)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 30 $\mu$m) which was integrally molded with the conveying container by injection molding.

As a result, the attaching time of the recording medium was 7 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.67 and the barcode readability was good. Results are presented in Table 2.

(Example 7)

The recording medium was attached in the same manner as in Example 3 and the above properties were evaluated in the same manner as in Example 1, except that the Ricoh rewritable laser medium (RLM-100L, average thickness: 210 $\mu$m, manufactured by Ricoh Company, Ltd.) serving as the recording medium was attached so that the maximum distance between the edge portion of the recording medium and the positioning portion was 8 $\mu$m.

As a result, the attaching time of the recording medium was 10 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 8)

The recording medium was attached in the same manner as in Example 3 and the above properties were evaluated in the same manner as in Example 1, except that the Ricoh rewritable laser medium (RLM-100L, average thickness: 210 $\mu$m, manufactured by Ricoh Company, Ltd.) serving as the recording medium was attached so that the maximum distance between the edge portion of the recording medium and the positioning portion was 15 $\mu$m.
As a result, the attaching time of the recording medium was 9 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 9)

The recording medium was attached in the same manner as in Example 3 and the above properties were evaluated in the same manner as in Example 1, except that the Ricoh rewritable laser medium (RLM-100L, average thickness: 210 $\mu$m, manufactured by Ricoh Company, Ltd.) serving as the recording medium was attached so that the maximum distance between the edge portion of the recording medium and the positioning portion was 25 $\mu$m.
As a result, the attaching time of the recording medium was 8 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.64 and the barcode readability was good. Results are presented in Table 2.

(Example 10)

The recording medium was attached in the same manner as in Example 1 and the above properties were evaluated in the same manner as in Example 1, except that the Ricoh rewritable laser medium (RLM-100L, average thickness: 210 $\mu$m, manufactured by Ricoh Company, Ltd.) serving as the recording medium was attached so that the maximum distance between the edge portion of the recording medium and the positioning portion was 1,500 $\mu$m.
As a result, the recording medium was attached with being mispositioned by 0.3 mm and 3°. The attaching time of the recording medium was 8 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 11)

The recording medium was attached in the same manner as in Example 1 and the above properties were evaluated in the same manner as in Example 1, except that the Ricoh rewritable laser medium (RLM-100L, average thickness: 210 $\mu$m, manufactured by Ricoh Company, Ltd.) serving as the recording medium was attached so that the maximum distance between the edge portion of the recording medium and the positioning portion was 700 $\mu$m.
As a result, the recording medium was attached with being mispositioned by 0.1 mm and 2°. The attaching time of the recording medium was 8 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 12)

The recording medium was attached in the same manner as in Example 1 and the above properties were evaluated in the same manner as in Example 1, except that the Ricoh rewritable laser medium (RLM-100L, average thickness: 210 $\mu$m, manufactured by Ricoh Company, Ltd.) serving as the recording medium was attached so that the maximum distance between the edge portion of the recording medium and the positioning portion was 400 $\mu$m.

As a result, the recording medium was attached with being mispositioned by 1°. The attaching time of the recording medium was 8 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Example 13)

The recording medium was attached in the same manner as in Example 1 and the above properties were evaluated in the same manner as in Example 1, except that a spatula (CAULKING SPATULA No. 7, manufactured by Ohtsuka Brush Mfg. Co., Ltd.) was used as a tool for attaching the Ricoh rewritable laser medium on the conveying container instead of the pressing roller and moved in one direction.

As a result, the attaching time of the recording medium was 10 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.66 and the barcode readability was good. Results are presented in Table 2.

(Example 14)

The recording medium was attached in the same manner as in Example 1 and the above properties were evaluated in the same manner as in Example 1, except that a conveying container was formed of a blue polypropylene (PP) resin plate (PP SHEET, thickness: 2 mm, manufactured by SANKO Co., Ltd.) and provided with no positioning portion on a surface thereof, and that a piece of fabric tape (FABRIC TAPE 1532, average thickness: 200 $\mu$m, manufactured by TERAOKA SEISAKUSHO CO., LTD.) was attached on the conveying container to form a positioning portion.

As a result, the attaching time of the recording medium was 135 seconds. The edge portion of the recording medium was attached on the PP resin plate without peeling even after 1,000 times of repetition of image recording and image erasing. Thereafter, the edge portion of the recording medium was also attached on the PP resin plate without peeling even after rubbing with the rule back and forth 10 times. The image density of the solid image was 1.65 and the barcode readability was good. Results are presented in Table 2.

(Comparative Example 1)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 230 $\mu$m) which was integrally molded with the conveying container by injection molding.

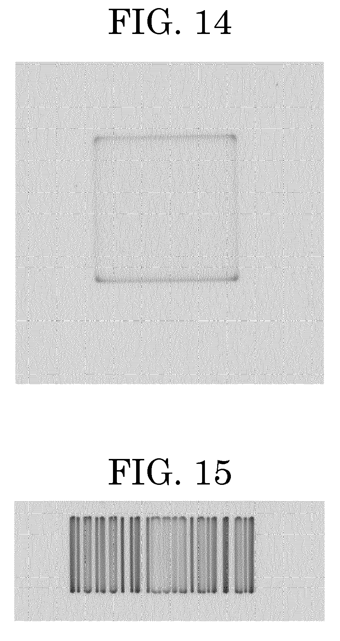

As a result, the attaching time of the recording medium was 4 seconds. The edge portion of the recording medium was peeled by 1.0 mm from the PP resin plate after 1,000 times of repetition of image recording and image erasing. Thereafter, the middle point of the side of the recording medium was peeled by 29.8 mm from the PP resin plate in the rubbing direction after rubbing with the rule back and forth 10 times. The image density of the solid image was 0.18 and the barcode was unreadable. Results are presented in Table 2. Note that, a scan image of the solid image is illustrated in FIG. 14 and a scan image of the barcode is illustrated in FIG. 15.

(Comparative Example 2)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 1,000 $\mu$m) which was integrally molded with the conveying container by injection molding.

As a result, the attaching time of the recording medium was 4 seconds. The edge portion of the recording medium was peeled by 3.3 mm from the PP resin plate after 1,000 times of repetition of image recording and image erasing. Thereafter, the middle point of the side of the recording medium was peeled by 30.3 mm from the PP resin plate in the rubbing direction after rubbing with the rule back and forth 10 times. The image density of the solid image was 0.18 and the barcode was unreadable. Results are presented in Table 2.

(Comparative Example 3)

The recording medium was attached in the same manner as in Example 1 and the above properties were evaluated in the same manner as in Example 1, except that a conveying container (rectangular parallelepiped, W: 40 cm, D: 30 cm, H: 30 cm) was formed of a blue polypropylene (PP) resin plate (PP SHEET, thickness: 2 mm, manufactured by SANKO Co., Ltd.) and provided with a positioning portion (average height: 2,050 $\mu$m) which was integrally molded with the conveying container by injection molding.

As a result, the attaching time of the recording medium was 4 seconds. The edge portion of the recording medium was peeled by 12.5 mm from the PP resin plate after 1,000 times of repetition of image recording and image erasing. Thereafter, the middle point of the side of the recording medium was peeled by 32.4 mm from the PP resin plate in the rubbing direction after rubbing with the rule back and forth 10 times. The image density of the solid image was 0.18 and the barcode was unreadable. Results are presented in Table 2.

Table 1

| | | Average height of positioning portion (μm) | Average thickness of recording medium (μm) | Maximum distance between edge portion of recording medium and positioning portion (μm) | Attaching tool | Material of positioning portion |
|---|---|---|---|---|---|---|
| Example | 1 | 200 | 210 | 100 | Pressing roller | PP |
| | 2 | 190 | 210 | 100 | Pressing roller | PP |
| | 3 | 170 | 210 | 100 | Pressing roller | PP |
| | 4 | 8 | 210 | 100 | Pressing roller | PP |
| | 5 | 15 | 210 | 100 | Pressing roller | PP |
| | 6 | 30 | 210 | 100 | Pressing roller | PP |
| | 7 | 170 | 210 | 8 | Pressing roller | PP |
| | 8 | 170 | 210 | 15 | Pressing roller | PP |
| | 9 | 170 | 210 | 25 | Pressing roller | PP |
| | 10 | 200 | 210 | 1,500 | Pressing roller | PP |
| | 11 | 200 | 210 | 700 | Pressing roller | PP |
| | 12 | 200 | 210 | 400 | Pressing roller | PP |
| | 13 | 200 | 210 | 100 | Spatula | PP |
| | 14 | 200 | 210 | 100 | Pressing roller | Fabric tape |
| Comparative Example | 1 | 230 | 210 | 100 | Pressing roller | PP |
| | 2 | 1,000 | 210 | 100 | Pressing roller | PP |
| | 3 | 2,050 | 210 | 100 | Pressing roller | PP |

## Table 2

| | | Mispositioning | | Attaching time (second) | Peeling after repetition (mm) | Peeling after rubbing with rule (mm) | Image density | Barcode readability |
|---|---|---|---|---|---|---|---|---|
| | | Distance (mm) | Angle (°) | | | | | |
| Example | 1 | 0.0 | 0 | 4 | 0.0 | 0.0 | 1.65 | A |
| | 2 | 0.0 | 0 | 4 | 0.0 | 0.0 | 1.64 | A |
| | 3 | 0.0 | 0 | 4 | 0.0 | 0.0 | 1.65 | A |
| | 4 | 0.0 | 0 | 9 | 0.0 | 0.0 | 1.66 | A |
| | 5 | 0.0 | 0 | 8 | 0.0 | 0.0 | 1.65 | A |
| | 6 | 0.0 | 0 | 7 | 0.0 | 0.0 | 1.67 | A |
| | 7 | 0.0 | 0 | 10 | 0.0 | 0.0 | 1.65 | A |
| | 8 | 0.0 | 0 | 9 | 0.0 | 0.0 | 1.65 | A |
| | 9 | 0.0 | 0 | 8 | 0.0 | 0.0 | 1.64 | A |
| | 10 | 0.3 | 3 | 8 | 0.0 | 0.0 | 1.65 | A |
| | 11 | 0.1 | 2 | 8 | 0.0 | 0.0 | 1.65 | A |
| | 12 | 0.0 | 1 | 8 | 0.0 | 0.0 | 1.65 | A |
| | 13 | 0.0 | 0 | 10 | 0.0 | 0.0 | 1.66 | A |
| | 14 | 0.0 | 0 | 135 | 0.0 | 0.0 | 1.65 | A |
| Comparative Example | 1 | 0.0 | 0 | 4 | 1.0 | 29.8 | 0.18 | B |
| | 2 | 0.0 | 0 | 4 | 3.3 | 30.3 | 0.18 | B |
| | 3 | 0.0 | 0 | 4 | 12.5 | 32.4 | 0.18 | B |

Aspects of the present invention are as follows:

<1> A structure including:

a supporting member;
a recording medium configured to be attached on a surface of the supporting member; and a positioning portion configured to serve as a mark when the recording medium is attached on the surface of the supporting member, the positioning portion having an average height lower than an average thickness of the recording medium.

<2> The structure according to <1>,
wherein the average height of the positioning portion is 90% or less of the average thickness of the recording medium.
<3> The structure according to <1> or <2>,
wherein the average height of the positioning portion and the average thickness of the recording medium satisfy an expression:

$$A > B / 20,$$

in which A is the average height of the positioning portion and B is the average thickness of the recording medium.
<4> The structure according to any one of <1> to <3>,
wherein the average height of the positioning portion is 5 $\mu$m or more.
<5> The structure according to any one of <1> to <4>,
wherein the average thickness of the recording medium is 50 $\mu$m or more.
<6> The structure according to any one of <1> to <5>,
wherein a maximum distance between an edge portion of the recording medium and the positioning portion is in a range of 10 $\mu$m or more but 1,000 $\mu$m or less.
<7> The structure according to any one of <1> to <6>,
wherein the average height of the positioning portion and the maximum distance between the edge portion of the recording medium and the positioning portion satisfy an expression:

$$A < 20 \times C,$$

in which A is the average height of the positioning portion and C is the maximum distance between the edge portion of the recording medium and the positioning portion.
<8> The structure according to any one of <1> to <7>,
wherein the recording medium is attached to the positioning portion on the supporting member using at least one of a pressing roller and a spatula.
<9> The structure according to any one of <1> to <8>,
wherein the recording medium is irradiated with laser light to heat the recording medium, to thereby perform at least one of image erasing and image recording.
<10> The structure according to any one of <1> to <9>,
wherein the recording medium is a thermoreversible recording medium.
<11> The structure according to <10>,
wherein the structure is configured to record an image on an entire surface of the thermoreversible recording medium and to erase the image on the entire surface of the thermoreversible recording medium.
<12> A conveyor line system including
the structure according to any one of <1> to <11> configured to be used as a conveying container.
<13> The conveyor line system according to <12>,
wherein the conveyor line system is used for at least one selected from the group consisting of a physical distribution management system, a delivery management system, a storage management system, and a process management system in a factory.

The structure according to any one of <1> to <11> and the conveyor line system according to <12> or <13> can solve the existing problems and achieve the object of the present invention.

**Claims**

1.  A structure comprising:

    a supporting member;
    a recording medium configured to be attached on a surface of the supporting member; and
    a positioning portion configured to serve as a mark when the recording medium is attached on the surface of the supporting member, the positioning portion having an average height lower than an average thickness of the recording medium.

2.  The structure according to claim 1,
    wherein the average height of the positioning portion is 90% or less of the average thickness of the recording medium.

3.  The structure according to claim 1 or 2,

wherein the average height of the positioning portion and the average thickness of the recording medium satisfy an expression:

$$A > B / 20,$$

in which A is the average height of the positioning portion and B is the average thickness of the recording medium.

4.  The structure according to any one of claims 1 to 3,
    wherein the average height of the positioning portion is 5 μm or more.

5.  The structure according to any one of claims 1 to 4,
    wherein the average thickness of the recording medium is 50 μm or more.

6.  The structure according to any one of claims 1 to 5,
    wherein a maximum distance between an edge portion of the recording medium and the positioning portion is in a range of 10 μm or more but 1,000 μm or less.

7.  The structure according to any one of claims 1 to 6,
    wherein the average height of the positioning portion and the maximum distance between the edge portion of the recording medium and the positioning portion satisfy an expression:

$$A < 20 \times C,$$

in which A is the average height of the positioning portion and C is the maximum distance between the edge portion of the recording medium and the positioning portion.

8.  The structure according to any one of claims 1 to 7,
    wherein the recording medium is attached to the positioning portion on the supporting member using at least one of a pressing roller and a spatula.

9.  The structure according to any one of claims 1 to 8,
    wherein the recording medium is irradiated with laser light to heat the recording medium, to thereby perform at least one of image erasing and image recording.

10. The structure according to any one of claims 1 to 9,
    wherein the recording medium is a thermoreversible recording medium.

11. The structure according to claim 10,
    wherein the structure is configured to record an image on an entire surface of the thermoreversible recording medium and to erase the image on the entire surface of the thermoreversible recording medium.

12. A conveyor line system comprising
    the structure according to any one of claims 1 to 11 configured to be used as a conveying container.

13. The conveyor line system according to claim 12,
    wherein the conveyor line system is used for at least one selected from the group consisting of a physical distribution management system, a delivery management system, a storage management system, and a process management system in a factory.

# FIG. 1

A →

# FIG. 2

B →

# FIG. 3

A →

105
102  103  100
102
101

# FIG. 4

102

101

# FIG. 5

# FIG. 6

# FIG. 7

# FIG. 8

# FIG. 9

102

101

# FIG. 10

200

204

203

202

201

205

# FIG. 11

# FIG. 12

# FIG. 13

# FIG. 14

# FIG. 15

Europäisches
Patentamt

European
Patent Office

Office européen
des brevets

# EUROPEAN SEARCH REPORT

Application Number

EP 16 16 1004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 016 547 A1 (RICOH K.K. [JP]) 5 July 2000 (2000-07-05) | 1-11 | INV. B41M5/26 |
| Y | * paragraphs [0001], [0094] - [0096] * * paragraphs [0115] - [0117] * * paragraphs [0134] - [0140] * * figures 4-9, 12 * | 12,13 | B41M5/30 B41M5/28 B41J3/28 B41J11/46 |
| X | US 3 828 359 A (VOGELGESANG P.J. ET AL) 6 August 1974 (1974-08-06) | 1-9 | |
| A | * column 6, line 37 - column 8, line 35 * * figure 2 * | 10-13 | |
| Y | US 2008/192618 A1 (NAKATA YOSHIKO [JP] ET AL) 14 August 2008 (2008-08-14) | 12,13 | |
| A | * paragraphs [0014] - [0026]; figure 1 * | 1-11 | |
| A | JP 2008 238768 A (SATO K.K.) 9 October 2008 (2008-10-09) * paragraphs [0001] - [0004], [0046] * * figures 1-3 * | 1-13 | |

TECHNICAL FIELDS
SEARCHED (IPC)

B41M
B41J
B65G
G06F
G06K
G03B
B41B
B65C

The present search report has been drawn up for all claims

| Place of search | Date of completion of the search | Examiner |
|---|---|---|
| The Hague | 14 July 2016 | Bacon, Alan |

EPO FORM 1503 03.82 (P04C01)

## ANNEX TO THE EUROPEAN SEARCH REPORT
## ON EUROPEAN PATENT APPLICATION NO.

EP 16 16 1004

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2016

| Patent document cited in search report | | | Publication date | Patent family member(s) | | | Publication date |
|---|---|---|---|---|---|---|---|
| EP 1016547 | | A1 | 05-07-2000 | DE | 69930580 | T2 | 18-01-2007 |
| | | | | EP | 1016547 | A1 | 05-07-2000 |
| | | | | ES | 2260885 | T3 | 01-11-2006 |
| | | | | US | 6432518 | B1 | 13-08-2002 |
| | | | | US | 2003104938 | A1 | 05-06-2003 |
| US 3828359 | | A | 06-08-1974 | AU | 475500 | B2 | 26-08-1976 |
| | | | | AU | 6401573 | A | 03-07-1975 |
| | | | | BE | 808904 | A1 | 20-06-1974 |
| | | | | CA | 1033406 | A | 20-06-1978 |
| | | | | CH | 590493 | A5 | 15-08-1977 |
| | | | | DE | 2365096 | A1 | 18-07-1974 |
| | | | | FR | 2211876 | A5 | 19-07-1974 |
| | | | | GB | 1451339 | A | 29-09-1976 |
| | | | | IT | 1000386 | B | 30-03-1976 |
| | | | | JP | S546215 | B2 | 26-03-1979 |
| | | | | JP | S4998254 | A | 17-09-1974 |
| | | | | US | 3828359 | A | 06-08-1974 |
| US 2008192618 | | A1 | 14-08-2008 | JP | 5009639 | B2 | 22-08-2012 |
| | | | | JP | 2008194905 | A | 28-08-2008 |
| | | | | US | 2008192618 | A1 | 14-08-2008 |
| JP 2008238768 | | A | 09-10-2008 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008194905 A
- JP 2010280498 A
- JP 2003320692 A